Europäisches Patentamt

European Patent Office

Office européen des brevets

(11) Veröffentlichungsnummer: **0 275 923**
**A2**

## EUROPÄISCHE PATENTANMELDUNG

(21) Anmeldenummer: 88100415.4

(22) Anmeldetag: **14.01.88**

(51) Int. Cl.⁴ **B23Q 3/10**

(30) Priorität: 17.01.87 DE 3701309
06.06.87 DE 3719010

(43) Veröffentlichungstag der Anmeldung:
**27.07.88 Patentblatt 88/30**

(84) Benannte Vertragsstaaten:
**AT BE CH DE FR GB IT LI NL SE**

(71) Anmelder: **Strack-Norma GmbH
Friedrich-Ebert-Strasse 109-111
D-5600 Wuppertal 1(DE)**

(72) Erfinder: **Rüth, Clemens
Kruppstrasse 264
D-5600 Wuppertal 1(DE)**

(74) Vertreter: **Sturies, Herbert
Patentanwälte Dr. Ing. Dipl. Phys. Herbert
Sturies Dipl. Ing. Peter Eichler
Brahmsstrasse 29, Postfach 20 12 42
D-5600 Wuppertal 2(DE)**

(54) **Aufspannvorrichtung für Werkstücke.**

(57) Ausrichtelemente (12) zum Ausrichten vorgebohrter Formplatten (10, 10') von Spritzgießwerkzeugen auf genuteten Maschinentischen (11) von Bearbeitungsmaschinen haben einen in eine Vorbohrung (19) der Formplatte (10) passend einsetzbaren Zapfen (13), einen in eine Nut (20) des Maschinentisches (11) passend einsetzbaren Führungsvorsprung (15) sowie einen radial zwischen die Formplatte (10, 10') und den Maschinentisch (11) vorspringenden Abstandskragen (17).

Um derartige Ausrichtelemente (12) kostengünstiger herstellen zu können und auch im Sinne einer weiteren Verbesserung der Aufspannvorrichtung benutzen zu können, ist der radial vorspringende Abstandskragen (17) des Ausrichtelements (12) ein auf dessen Zapfen (13) aufsteckbares separates Teil.

FIG.1

## Aufspannvorrichtung für Werkstücke

Die Erfindung bezieht sich auf eine Aufspannvorrichtung für Werkstücke, insbesondere vorgebohrte Formplatten von Spritzgießwerkzeugen, auf genuteten Maschinentischen von Bearbeitungsmaschinen, mit einem Ausrichtelement, das einen in eine Vorbohrung der Formplatte passend einsetzbaren Zapfen, einen in eine Nut des Maschinentisches passend einsetzbaren Führungsvorsprung sowie einen radial zwischen die Formplatte und den Maschinentisch vorspringenden Kragen aufweist.

Spritzgießwerkzeuge besitzen Formplatten, in welche die Formen der durch Spritzgießen herzustellenden Teile eingearbeitet werden müssen, wie auch alle weiteren Ausnehmungen, z.B. Bohrungen und Taschen für Einsätze und Führungen. Zum Einarbeiten solcher Ausnehmungen müssen die Formplatten alle exakt gleich ausgerichtet werden, damit in aufeinander zu liegen kommenden Formplatten deckungsgleiche Ausnehmungen hergestellt werden können. Die Formplatten sind üblicherweise Normteile und besitzen als solche genormte Vorbohrungen, an denen die Ausrichtung erfolgen muß, da eine Ausrichtung an den Kanten der Platten wegen der zwischen einer Vorbohrung und einer Kante vorhandenen Toleranz nicht genau genug wäre. Die Ausrichtung einer Formplatte muß jedesmal von neuem erfolgen, so daß also jedesmal die Bearbeitungsmaschine erneut auf einen durch die Vorbohrung gebildeten Nullpunkt und die Koordinaten von mindestens zwei Bohrungen eingestellt werden muß. Das ist umständlich und zeitaufwendig.

Es ist daher bereits vorgeschlagen, ein Ausrichtelement mit den eingangs genannten Merkmalen zu verwenden, um die Formplatte mit ihren Vorbohrungen relativ zum Werktisch schnell auszurichten. Hierzu ist es lediglich erforderlich, den Zapfen des Ausrichtelements in die Vorbohrung und seinen Führungsvorsprung in die Nut des Maschinentisches einzustecken, so daß mit zwei Ausrichtelementen eine Parallelausrichtung der Formplatte zu der die Führungsvorsprünge der beiden Ausrichtelemente aufnehmenden Nut des Maschinentisches möglich ist. Die vorgeschlagenen Ausrichtelemente besitzen jeweils einen Kragen, der zwischen die Formplatte und den Maschinentisch vorspringt, um beide auf Abstand voneinander zu halten. Dieser Abstand ist z.B. erforderlich, um eine Bohrung in der Formplatte ausführen zu können, ohne dabei in den Maschinentisch hineinzubohren. Der Kragen ist mit dem zugehörigen Zapfen einstückig. Infolgedessen ergibt sich ein formenmäßig vergleichsweise aufwendiges Teil, welches in zueinander senkrechten Richtungen genaubearbeitet werden muß. Nicht nur der Zapfendurchmesser muß toleranzgenau hergestellt werden, damit die gewünschte Justierung erreicht wird, sondern auch der Kragen muß exakt im Winkel bearbeitet und axial toleranzgenau hergestellt werden. Das bedingt erhebliche Gestehungskosten und beschränkt die Einsatzmöglichkeiten des Ausrichtelements. Demgegenüber liegt der Erfindung die Aufgabe zugrunde, eine Aufspannvorrichtung hinsichtlich ihres Ausrichtelements so zu verbessern, daß dieses universeller und insbesondere als Normteil zur Ausrichtung vorgebohrter Formplatten von Spritzgießwerkzeugen ausgebildet werden kann. Diese Aufgabe wird dadurch gelöst, daß der radial vorspringende Abstandskragen des Ausrichtelements ein auf dessen Zapfen steckbares separates Teil ist.

Für die Erfindung ist von Bedeutung, daß der Zapfen und der mit diesem zusammenwirkende Abstandskragen jeweils als separate Teile ausgebildet sind. Das ist eine Grundvoraussetzung zur Herstellung von Normteilen. Beispielsweise können Zapfen unterschiedlicher Durchmesser mit Abstandskragen derselben Höhe zusammengebaut werden, oder es können Zapfen desselben Durchmessers mit Abstandskragen unterschiedlicher Höhe verwendet werden. Darüber hinaus ist die Herstellung der Teile vereinfacht. Die Zapfen können beispielsweise als Automatendrehteile hergestellt werden, was die Gestehungskosten erheblich senkt. Die Abstandskragen können ebenfalls sehr einfach hergestellt werden. Wenn sie als Ringscheiben hergestellt werden, kann auf Massenware zurückgegriffen werden.

Der Zapfen des Ausrichtelements hat maschinentischseitig ein abgesetztes Zapfenende, auf das der als Ringscheibe ausgebildete Abstandskragen aufgesteckt ist. Das Zapfende bestimmt also den Ort der Anordnung des losen Abstandskragens. Das Aufstecken im Sinne einer üblichen Steckverbindung ist eine in den meisten Fällen ausreichende Art des Zusammenbaus. Unter Aufstecken kann hier aber auch sonstiger formschlüssiger Zusammenbau verstanden werden, beispielsweise durch Verschraubung oder bajonettartig.

Vorteilhafterweise ist das abgesetzte Zapfenende kürzer als der Abstandskragen dick. Daher ist es nicht möglich, daß das abgesetzte Zapfenende auf dem Maschinentisch aufsitzt. Infolgedessen kann der Zapfen zum Aufspannbefestigen herangezogen werden, also entweder zum Aufspannen des Abstandskragens oder zum Aufspannen radial aufspreizbarer Teile des Zapfens oder des Ausrichtelements.

Zur Erleichterung des Aus-und Einbaus weist der Zapfen eine Ausnehmung mit einer Hinterschneidung für ein Ausziehwerkzeug auf.

In Weiterbildung der Erfindung weist der Zapfen des Ausrichtelements in der Vorbohrung der Formplatte ein zu deren Befestigung und/oder Radialausrichtung dienendes Spreizteil auf. Das Ausrichtelement dient also nicht mehr nur der Ausrichtung der Formplatte, sondern auch der Beseitigung des Einflusses radialer Toleranzen des Zapfens und der Vorbohrung der Formplatte und auch deren Befestigung, welche bislang in üblicher Weise erfolgen mußte, also beispielsweise mit Spannkloben, die in die Nuten des Maschinentisches eingehängt wurden und die Formplatte darauf festklemmten. Das Ausrichtelement ermöglicht also die Einsparung von Spannkloben bzw. erübrigt deren Verwendung überhaupt.

Das Spreizteil ist eine längsgeschlitzte Hülse mit Innenkonus, welche auf einem Außenkonus des Zapfens spreizbar ist, oder das Spreizteil ist ein aus den Zapfen umgebenden Federspannringen bestehendes Paket. Das Spreizteil ist von einer in den Führungsvorsprung oder den Zapfen eingreifenden Befestigungsschraube direkt oder mit einem Druckstück oder von einem an dem Zapfen zu verstellenden Druckstück spreizbar. Mit Hilfe dieser Spreizteile und der diese beaufschlagenden Betätigungselemente können die jeweils erforderlichen Befestigungs-und Ausrichterfordernisse erfüllt werden.

Das Spreizteil ist mindestens ein in sich geschlossener Konusring, der mit einem konzentrisch zum Zapfen angeordneten zweiten Konusring oder auf einem Außenkonus des Zapfens spreizbar ist. Bei einer derartigen Ausbildung der Aufspannvorrichtung kann ein herkömmlicher, handelsüblicher Konusring dazu verwendet werden, den Zapfen in einer Vorbohrung der Formplatte festzusetzen und/oder Toleranzen auszugleichen, welche die Vorbohrung und der Zapfen aufweisen.

Vorteilhafterweise sind zwei Konusringpaare übereinander in einer rechteckigen Querschnitt aufweisenden Ringausnehmung des Zapfens angeordnet und mit einem zumindest auf einen der Konusringe einwirkenden Druckstück spreizbar. Die Verwendung von Konusringpaaren vermeidet die aufwendige Herstellung eines Außenkonus des Zapfens. Außerdem wird durch die Axialverschieblichkeit des zweiten Konusrings die Spreizung vergrößerbar, wie auch durch die Spreizbarkeit des zweiten Konusrings an sich. Zwei Konusringpaare vergrößern darüber hinaus die Axiallänge, auf der gespreizt wird, so daß sich eine bessere Führung und Halterung des Zapfens in der Vorbohrung ergibt.

Eine besonders vorteilhafte Ausführungsform zum Spannen eines Konusrings oder zum Spannen von Konusringpaaren hat die Merkmale, daß der Führungsvorsprung zumindest axial mit den Zapfen fest verbunden ist, der von einer Befestigungsschraube und einer damit zusammenwirkenden Befestigungsmutter in einer Nut des Maschinentisches zu diesem hin spannbar ist, und/oder daß der Zapfen bedarfsweise ein begrenzt axial bewegliches, auf dem Abstandskragen abstützbares Druckstück sowie einen diesem gegenüber, auf der anderen Seite des Konusrings oder der Konusringpaare angeordnete feste Druckschulter aufweist. Von Bedeutung ist hierbei, daß der Zapfen selbst mit seiner Druckschulter auf den Konusring oder die Konusringpaare drückt, so daß sich eine wesentliche Vereinfachung der Aufspannvorrichtung in diesem Bereich ergibt, wobei das auf dem Zapfen begrenzt axial bewegliche Druckstück ein herkömmliches Teil ohne feine Toleranzen und infolgedessen mit geringen Herstellungskosten sein kann. Die Begrenzung der Beweglichkeit des Druckstücks ermöglicht es zugleich, dieses als Bauteil einzusetzen, welches den Zusammenhalt des Konusrings bzw. der Konusringpaare mit dem Zapfen bewahrt. Die Spreizteile können aber auch ohne Druckstück direkt z. B. gegen den Abstandskragen gespannt werden.

Die Befestigungsmutter ist ein Teil einer Gewindelochleiste, die mindestens ein weiteres, außerhalb des axialen Projektionsbereichs des Ausrichtelements gelegenes Gewindeloch hat, in das eine Leistenhandhabe und/oder eine Befestigungsschraube eingeschraubt ist. Eine derartige Ausgestaltung der Befestigungsmutter erlaubt in erster Linie einen einfachen Zusammenbau mit der Befestigungsschraube ohne langes Suchen der in die Nut eingebrachten und unter dem Führungselement nicht sichtbaren Befestigungsmutter. Sofern die Gewindelochleiste nicht aus der Befestigungsnut der Adapterplatte oder aus der Nut des Maschinentisches hervorsteht, so daß die Befestigungsmutter mit dem freien Ende der Gewindelochleiste in die richtige relative Lage zur Befestigungsschraube des Ausrichtelements bugsiert werden kann, ist das weitere Gewindeloch vorteilhafterweise dazu zu benutzen, eine Leistenhandhabe anzubringen, mit der die Gewindeleiste in der Nähe des Ausrichtelements von oberhalb der Adapterplatte oder des Maschinentischs bewegt werden kann. Nach der Positionierung der Befestigungsmutter und ihrem Verschrauben mit der Befestigungsschraube des Ausrichtelements kann das weitere Gewindeloch dazu benutzt werden, eine Befestigungsschraube einzuschrauben, mit der beispielsweise die Adapterplatte mittels eines Spannklobens gegen senkrecht zum Maschinentisch gerichtete Bewegungen gesichert werden kann.

In Ausgestaltung der Erfindung weist der Zapfen eine oberhalb einer Befestigungsschraube gelegene Gewindebohrung mit einem darin einsetzbaren Schraubenniederhalterschlüssel auf, der eine zentrale Bohrung für ein Betätigungswerkzeug der Befestigungsschraube hat. Durch diese Ausgestaltung der Aufspannvorrichtung ist es möglich, den in der Vorbohrung der Formplatte mit Hilfe des Spreizteils festgesetzten Zapfen zu lösen und zu entfernen. Der durch ein Spreizteil auf den Zapfen bewirkte Niederzug bzw. Klemmeffekt kann damit aufgehoben werden.

In Weiterbildung der Erfindung wird eine Aufspannvorrichtung für Werkstücke, insbesondere vorgebohrte Formplatten von Spritzgießwerkzeugen, auf genuteten Maschinentischen von Bearbeitungsmaschinen derart ausgebildet, daß eine auf dem Maschinentisch ausrichtbare Adapterplatte mit zwei einander senkrechten Befestigungsnuten vorhanden ist.

Mit Hilfe dieser Adapterplatte kann jede Formplatte in den beiden zueinander senkrechten Nuten ohne weiteres Ausrichten derart befestigt werden, daß die gewünschte Ausrichtung und zugleich auch die Einstellung des Nullpunktes erfolgt. Hierbei wird unterstellt, daß die Adapterplatte mit ihrer einen Nut parallel zu den Werktischnuten ausgerichtet und der Schnittpunkt der beiden zueinander senkrechten Nuten der Adapterplatte zur Bestimmung des Nullpunkts der Bearbeitungsmaschinen herangezogen wurde. Wenn man davon ausgeht, daß die Formplatte zwei einander diagonal gegenüberliegende Vorbohrungen hat, welche zwei kantenparallele Geraden bestimmen, die einen rechten Winkel einschließen, so bewirkt eine Anordnung und Befestigung der Formplatte mit Hilfe der beiden zueinander senkrechten Nuten der Adapterplatte zwangsläufig die gewünschte Ausrichtung und Nullpunktlage. Das gilt unabhängig von der Größe bzw. dem Format der Formplatte, sofern sie nur mindestens die beiden vorbeschriebenen Vorbohrungen aufweist.

Vorteilhafterweise sind die beiden Befestigungsnuten jeweils in Kantennähe der Adapterplatte angeordnet, weil die Vorbohrungen der Formplatten ebenfalls jeweils in Kantennähe vorhanden sind, so daß infolgedessen mit einer Adapterplatte alle Formplatten bis etwa zum Format der Adapterplatte bearbeitet werden können.

Zweckmäßigerweise weist die Adapterplatte weitere, einer der Befestigungsnuten parallele Nuten und/oder weitere Spannbohrungen auf. Mit Hilfe dieser weiteren Nuten ist es möglich, jeder Formplatte eine weitere Befestigungsstelle zuzuordnen.

Die Adapterplatte hat im Schnittbereich der beiden einander senkrechten Befestigungsnuten eine Bohrung, in die ein Ausrichtelement für vorgebohrte Formplatten mit einem Befestigungsvorsprung hineingesteckt und mit der Adapterplatte verschraubbar ist. Dadurch ist es möglich, die zu bearbeitende Formplatte auch im Nullpunkt selbst zu befestigen, wo es sonst praktisch nicht möglich wäre, ein übliches Ausrichtelement festzulegen.

Die Adapterplatte ist maschinentischseitig mit einem tischnutenparallelen Nutenpaßstab oder mit zwei in Nuten des Maschinentisches passenden Zentrierstücken versehen, von denen eines einen Verstellexenter aufweist. Während üblicherweise die Nutenpaßleiste zum Ausrichten der Adapterplatte ausreichen dürfte, kann bei älteren Maschinentischen die Betätigung des Verstellexenters für ein Nachausrichten herangezogen werden.

Die Adapterplatte weist in ihren beiden Befestigungsnuten mindestens drei als Kantenanschläge einer zu bearbeitenden vorbohrungsfreien Formplatte wirkende Ausrichtelemente auf, und die Formplatte ist bei ihrer Bearbeitung an der Adapterplatte mit Abstand zu dieser befestigt. Infolgedessen können völlig vorbohrungsfreie Formplatten bearbeitet werden, beispielsweise formgebende Platten von Spritzgießwerkzeugen. Damit ist die eine Adapterplatte aufweisende Aufspannvorrichtung auch dazu geeignet, vorbohrungsfreie Formplatten so zu bearbeiten, daß sie nach dieser Bearbeitung ausgehend von dem durch die Aufspannplatte vorbestimmten Nullpunkt von der Bearbeitungsmaschine bearbeitet werden können, wenn sie mit ihren dann hergestellten Vorbohrungen unter Verwendung zweier in den zueinander senkrechten Befestigungsnuten angeordneten Ausrichtelementen ausgerichtet sind.

Die Erfindung wird anhand von in der Zeichnung dargestellten Ausführungsbeispielen erläutert. Es zeigt:

Fig. 1 einen Querschnitt durch ein zwischen einer Formplatte und einem Werkzeugtisch eingebautes Ausrichtelement,

Fig. 2 eine auseinandergezogene Darstellung eines Ausrichtelements, ähnlich dem der Fig. 1, mit mehreren dazugehörigen Führungsvorsprüngen,

Fig. 3 zwei weitere erfindungsgemäße Ausführungsformen davon eine mit einem Spreizteil zur Befestigung der Formplatte,

Fig. 4 zwei weitere Ausführungsformen mit Spreizteilen,

Fig. 5 eine Aufsicht auf eine Adapterplatte,

Fig. 6 den Querschnitt der Fig. 5 längs der Linie VI-VI,

Fig. 7 einen Querschnitt durch ein besonderes Ausrichtelement zur Anordnung im Schnittpunkt der beiden zueinander senkrechten Nuten der Adapterplatte der Fig. 5,

Fig. 8 einen Querschnitt der Fig. 5 längs der Linie VIII-VIII,

Fig. 9 einen Querschnitt einer weiteren Ausführungsform einer Aufspannvorrichtung,

Fig. 10, 10a Schnittdarstellungen einer weiteren Ausführungsform einer Aufspannvorrichtung, und

Fig. 11 eine Aufsicht auf eine Adapterplatte mit einer darüber im Abstand angeordneten vorbohrungsfreien und zu bearbeitenden Formplatte.

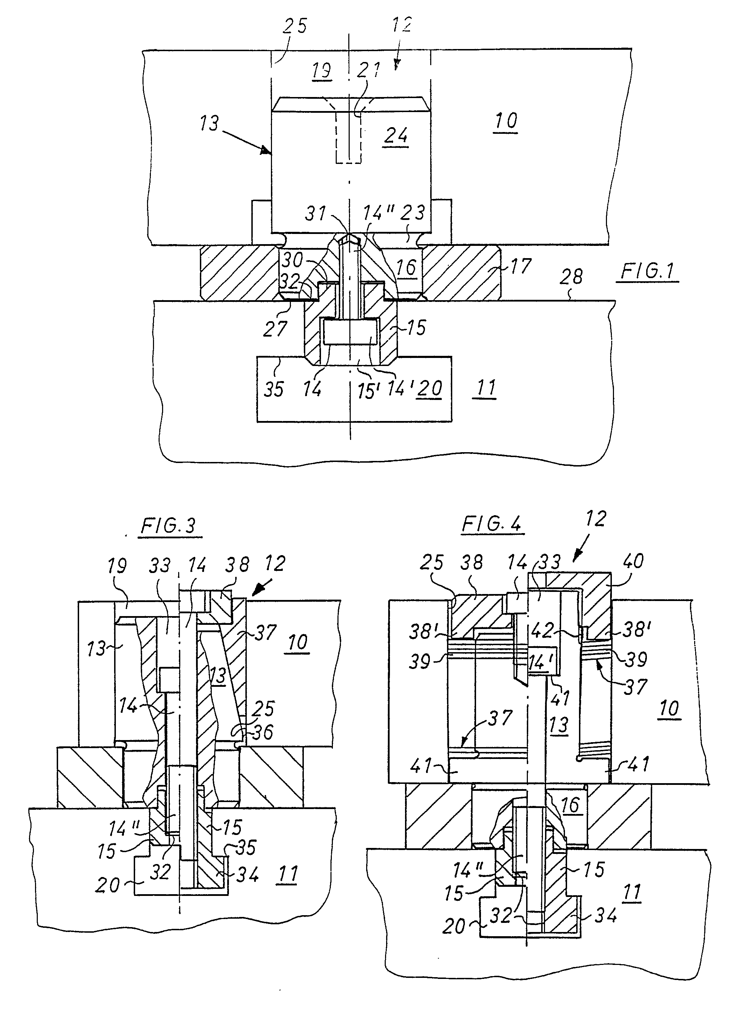

Die in Fig. 1 dargestellte Aufspannvorrichtung ist zwischen einer Formplatte 10 und einem Maschinentisch 11 angeordnet und besteht im wesentlichen aus einem Ausrichtelement 12. Das Ausrichtelement 12 hat einen Zapfen 13, einen daran mit einer Schraube 14 befestigten Führungsvorsprung 15 und einen den Zapfen 13 bzw. dessen Ende 16 umgebenden Abstandskragen 17.

Der Maschinentisch 11 hat eine Nut 20, die T-förmig ist und mit ihrem formplattenseitigen Nutenabschnitt den Führungsvorsprung 15 aufnimmt.

Der Zapfen 13 besitzt zu seinem Ein-und-Ausbau eine Ausnehmung 21, in die ein nicht dargestelltes Ausziehwerkzeug eingreifen kann, beispielsweise eine Gewindestange, wenn die Ausnehmung 21 ein Innengewinde hat. Ein solches Innengewinde ist in Fig. 2 mit 22 bezeichnet. Das Ende 16 des Zapfens 13 ist abgesetzt, hat also einen kleineren Außendurchmesser, als der Zapfen 13 im Bereich seiner Ausnehmung 21. Im Übergangsbereich ist eine Auskehlung 23 vorhanden, welche die kreiszylinderförmige Paßfläche 24, die in der entsprechend paßgenauen Bohrungsfläche 25 der Vorbohrung 19 sitzt, von der ebenfalls kreiszylindrischen Außenumfangsfläche des Zapfenendes 16 trennt. Dessen Außenumfang dient der Lagerung des Abstandskragens 17, dessen Bohrungsfläche 26, vgl. Fig. 2, das Zapfenende 16 lose umgeben kann, da es hierbei auf einen Paßsitz nicht ankommt und lediglich dafür gesorgt werden muß, daß der Abstandskragen eine zum Abstützen der Formplatte 10 auf dem Maschinentisch 11 ausreichende Lage einnimmt. Dabei genügt es, wenn die Höhe des Abstandskragens 17 in etwa genau ist, falls es nicht auf die genaue Höhe zwischen Formplatte 10 und Maschinentisch 11 ankommt. Voraussetzung ist dafür, daß alle Abstandskragen 17 dieselbe Höhe haben.

Das Zapfenende 16 stützt sich mit seiner Stirnfläche 27 auf der Oberfläche 28 des Maschinentischs 11 ab. In die Stirnfläche 27 ist gemäß Fig. 2 eine prismatische Passungsausnehmung 29 eingearbeitet, in die ein Passungskopf 30 des Führungsvorsprungs 15 eingreift. Die Passungsausnehmung 29 besitzt Passungsflächen 29', welche mit den Passungsflächen 30' des Passungskopfs 30 im Sinne einer Radialpassung zusammenwirken, so daß also der Führungsvorsprung 15 und der Zapfen 13 paßgenau zusammenzubauen sind. Der Passungskopf 30 ist ebenso breit, wie der enge Bereich der Führungsnut 20, vgl. linke Führungsvorsprünge 15 der Fig. 2, oder er ist schmaler, vgl. Fig. 1 und rechte Führungsvorsprünge 15 der Fig. 2. Damit können die Führungsvorsprünge 15 unterschiedlichen Nutenweiten angepaßt werden, ohne daß zugleich auch unterschiedliche Zapfen 13 erforderlich wären. Vielmehr wird die Passung bzw. der Anschluß zwischen beiden Teilen 13, 15 jeweils gleich ausgestaltet, so daß von beiden Bauteilen Normreihen erstellt werden können.

Fig. 2 läßt erkennen, daß der Führungsvorsprung 15 ein prismatischer Körper ist, dessen Passungsflächen 30' entsprechend prismatisch sind. Es versteht sich aber, daß der Führungsvorsprung 15 und/oder sein Führungskopf 30 auch kreiszylindrisch oder sonstwie passungsfähig ausgebildet sein können.

Die Befestigung des Führungsvorsprungs 15 erfolgt gemäß Fig. 1 mit der Befestigungsschraube 14, deren Schraubenkopf 14' in einer Kopfausnehmung 15' des Führungsvorsprungs 15 angeordnet ist und mit ihrem Gewindeschaft 14" in eine Gewindebohrung 31 des Zapfenendes 16 eingreift. Der Zapfen 13 und der Führungsvorsprung 15 werden derart miteinander verschraubt, daß die neben dem Passungskopf 30 gelegene Ringstirnfläche 32 des Führungsvorsprungs 15 gegen die Stirnfläche 27 des Zapfenendes 16 gezogen wird. Der Passungskopf 30 hat einen geringen axialen Abstand vom Zapfen 13 bzw. vom Zapfenende 16.

Fig. 3 zeigt in ihrer linken Hälfte eine Befestigung des Zapfens 13 und des Führungsvorsprungs 15, bei dem die Befestigungsschraube 14 durch eine Durchgangsbohrung 33 hindurch mit ihrem Gewindeschaft 14" in eine Gewindebohrung 32 des Führungsvorsprungs 15 eingeschraubt ist.

Die Fig. 2, 3 und 4 zeigen Ausführungsbeispiele, in denen der Führungsvorsprung 15 jeweils einen Radialvorsprung 34 aufweist, der in die Nut 20 des Maschinentisches 11 eingebaut wird und an dessen Hinterschneidungen 35 zur Anlage kommt, so daß sich eine axial formschlüssige Verbindung ergibt, wenn die Befestigungsschraube 14 in die Gewindebohrung 32 des Führungsvorsprungs 15 derart eingeschraubt wird, daß sich die Stirnfläche 27 des Zapfenendes 16 auf der Oberfläche 28 des Maschinentisches 11 festsetzt. Eine derartige Festsetzung der Ausrichtelemente 12 ist insbesondere dann wünschenswert, wenn die Ausrichtelemente 12 zugleich auch dazu dienen, Kräfte auf den Maschinentisch 11 zu übertragen, welche bei der Bearbeitung der Formplatte 10 durch die Bearbeitungsmaschinen entstehen.

Gemäß Fig. 4, linke Hälfte, wird der Führungsvorsprung entsprechend Fig. 3, linke Hälfte, ausgebildet. Das Ausrichtelement der Fig. 2, linke Hälfte, dient dann nicht der Axialbefestigung, sondern in erster Linie der Minimierung radialer Toleranzen, insbesondere im Bereich der Bohrung 19, und erleichtert die Handhabung einer Vielzahl von Teilen.

Fig. 3, rechte Hälfte und Fig. 4 zeigen Ausrichtelemente 12, die in diesem Sinne zugleich auch dazu bestimmt sind, die Formplatte 10 auf dem Maschinentisch 11 zu befestigen. Hierzu besitzt der Zapfen 13 ein Spreizteil 37 in Gestalt einer geschlitzten Hülse mit zylindrischem Außenumfang und konischem Innenumfang, die sich an der Bohrungsfläche 25 der Vorbohrung 19 bzw. an dem kegeligen Außenumfang des Zapfens 13 abstützt, dessen größter Außenumfang etwas Abstand 36 zur Bohrungsfläche 25 aufweist. Wenn die Befestigungsschraube 14 in den Führungsvorsprung 15 so hineingeschraubt wird, daß sich dessen Radialvorsprung 34 an der Hinterschneidung 35 der Nut 20 abstützt, drückt sie mit einer Buchse 38 auf das Spreizteil 37, welches sich auf den Zapfen 13 aufschiebt, und zwar derart, daß letzterer zentriert bleibt und sich festklemmt.

Fig. 4 zeigt zwei Ausführungsformen, denen die Verwendung von Federspannringen 39 gemeinsam ist. Diese Federspannringe 39 sind in der rechten Hälfte der Fig. 4 in ungespannter Lage und in der linken Hälfte der Fig. 4 in gespannter Lage dargestellt. Von den Federspannringen 39 sind jeweils nur die obersten und untersten dargestellt, es versteht sich jedoch, daß zwischen einem Druckstück 38 bzw. 40 und einem Lagerkragen 41 des Zapfens 13 jeweils ein vollständiges Paket solcher Federspannringe 39 vorhanden ist. Dieses Paket wird mit den Druckstücken 38, 40 gespannt. Dabei vergrößert sich ihr Außenumfang derart, daß sie sich damit an der Bohrungsfläche 25 festsetzen. Die Federspannringe 39 sind so bemessen, daß sie beim Zusammendrücken des Pakets das Ausrichtelement 12 in der Formplatte 10 festsetzen und dabei radiale Toleranzen zu der Bohrung 19 der Formplatte 10 überbrücken.

Fig. 4 zeigt in der linken Hälfte ein Druckstück 38, welches ähnlich dem Druckstück 38 der Fig. 3 mit der Befestigungsschraube 14 axial zum Zapfen 13 hin verstellt wird. Das Druckstück 38 hat einen kreisringförmigen Druckvorsprung 38', der die Federspannscheiben 39 flachdrückt. Hierbei wird vorausgesetzt, daß der Zapfen 13 nicht axial am Maschinentisch 11 befestigt werden muß. In der rechten Hälfte der Fig. 4 erfolgt hingegen die bereits zu Fig. 3, rechte Hälfte beschriebene Befestigung des Zapfens 13 mit einem Führungsstück 15, in dessen Gewindebohrung 32 die Befestigungsschraube 14 eingreift, deren Kopf 14' sich innerhalb der Durchgangsbohrung 33 an einem Bohrungsabsatz 41 abstützt. Der Zapfen 31 hat ein Außengewinde 42, auf das ein Gewindering als Druckstück 40 aufgeschraubt ist, welches mit

ringförmigem Druckvorsprung 38' auf die Federspannscheiben 39 drückt. Hierbei erfolgt die Kraftübertragung von der Formplatte 10 über die Federspannringe 39, den Zapfen 13 und dessen Zapfenende 16 sowie die Befestigungsschraube 14 und den Führungsvorsprung 15 auf den Maschinentisch 11.

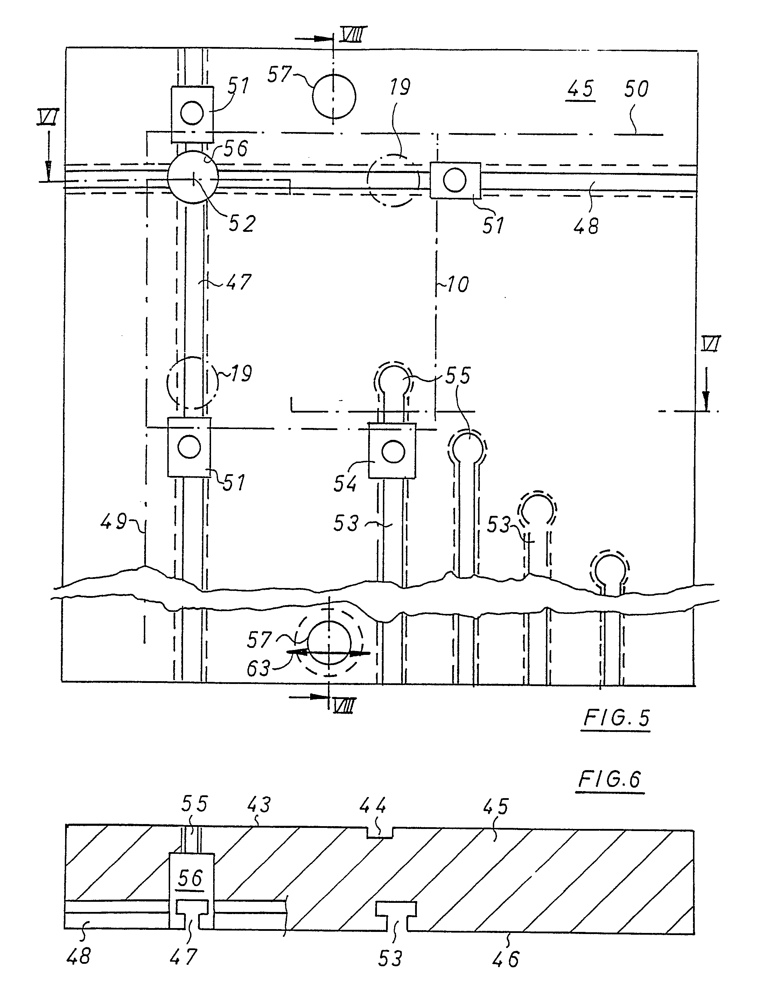

Fig. 5 zeigt eine Adapterplatte 45, die gemäß Fig. 6 eine Bodennut 44 aufweist, in die ein Paßstab eingreift und bei gleichzeitigem Eingriff in eine Nut des Maschinentisches 11 für eine Längsausrichtung der Adapterplatte 45 sorgt. Der Bodenfläche 43 gegenüberliegend ist in die Aufspannfläche 46 der Adapterplatte 45 ein Nutensystem eingearbeitet, das mindestens zwei zueinander senkrechte Nuten 47, 48 aufweist, die gemäß Fig. 1 profiliert sind. Sie dienen der Aufnahme von Ausrichtelementen 12, die in vorbeschriebener Weise in Vorbohrungen 19 von Formplatten 10 eingebaut werden.

In Fig. 5 ist lediglich beispielsweise eine Formplatte 10 strichpunktiert und mit zwei Vorbohrungen 19 dargestellt. Die den Nuten 47, 48 parallelen strichpunktierten Linien 49, 50 deuten etwa die maximalen Seitenlängen von Formplatten an, die auf der Adapterplatte 45 verarbeitet werden können. Hierzu müssen die Formplatten 10 festgespannt werden, wozu jedoch nicht nur die beispielsweise in den Fig. 3, 4 beschriebenen Ausrichtelemente 12 verwendet werden, welche in die Vorbohrungen 19 der Formplatten eingreifen, sondern es können auch übliche Spannkloben 51 verwendet werden, die ebenfalls in den Nuten 47, 48 der Adapterplatte 45 verankert werden können.

Fig. 5 läßt erkennen, daß die zueinander senkrechten Nuten 47, 48 der Adapterplatte 45 vollständig ausreichen, um den Nullpunkt 52 festzulegen, der bei entsprechender Befestigung der Adapterplatte 45 auf dem Maschinentisch 11 für alle Bearbeitungsvorgänge in die Bearbeitungsmaschine eingegeben werden kann, bei denen Formplatten 10 bezüglich dieses Nullpunkts 52 in einfacher Weise mit Ausrichtelementen 12 ausgerichtet werden. Diese Ausrichtung erfolgt zweckmäßigerweise durch Eingriff dieser Ausrichtelemente 12 in die einander diagonal gegenüberliegenden Vorbohrungen 19 der Formplatte 10 oder weiterer Formplatten. Diese Vorbohrungen 19 sind gestrichelt dargestellt. Es ist ersichtlich, daß es wegen der definierten Lage dieser Vorbohrungen 19 und der beiden Nuten 47, 48 nur eine einzige Ausrichtlage für eine Formplatte 10 gibt, die eben jenen Nullpunkt 52 hat. Infolgedessen ist es leicht möglich, eine Vielzahl von Formplatten auch unterschiedlicher Formate deckungsgleich zu bearbeiten, sofern sie nur zwei je Formplatte identische Vorbohrungen haben.

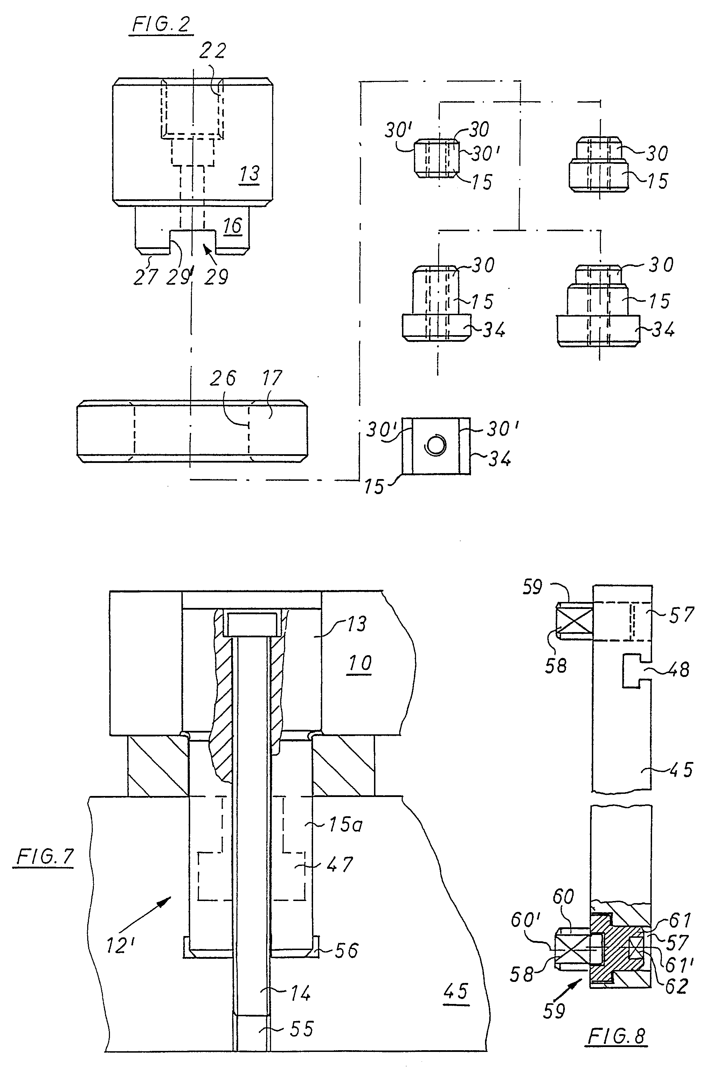

Diese zwei Vorbohrungen 19 genügen in Verbindung mit den die Aufspannung der Formplatten 10 auf der Adapterplatte 45 bewirkenden Ausrichtelementen 12 bereits, um in allen Bearbeitungsrichtungen der Formplatte Bearbeitungskräfte abtragen zu können. Lediglich für größere Bearbeitungskräfte sind zusätzliche Verspannungen der Formplatte 10 nötig. Hierzu dient das Ausrichtelement der Fig. 7 und/oder eine vierte Befestigungsstelle im Bereich zwischen den Nuten 47, 48, für die weitere parallele Nuten 53 vorgesehen sind. Diese Nuten 53 sind einander und der Befestigungsnut 47 parallel. Stattdessen könnten auch der Befestigungsnut 48 parallele Nuten und/oder Lochmuster vorhanden sein. Mit der dargestellten Anordnung von parallelen Nuten 53 ist es möglich, Serien von Formplatten 10, die in ihren Größenverhältnissen genormt sind, auf einfache Weise festzulegen. Hierzu dient gemäß Fig. 5 ein Spannkloben 54. Es versteht sich jedoch, daß auch beispielsweise ein Ausrichtelement 12 gemäß der rechten Hälfte der Fig. 4 verwendet werden kann, wobei die Anfangsbohrungen 55 der Nuten 53 der Erleichterung des Einbaus der Befestigungsmittel dienen.

Im Bereich des Nullpunkts 52 bzw. im Schnittbereich der Nuten 47, 48 ist die Adapterplatte 45 mit einer Bohrung 56 versehen, zu der eine Gewindebohrung 55 gleichachsig angeordnet ist. In die Gewindebohrung 56 ist gemäß Fig. 7 ein Ausrichtelement 12' eingesetzt, dessen Zapfen 13 mit einem einstückigen Führungsvorsprung 15a in Gestalt eines Rundbolzens versehen ist, der in die Bohrung 56 mit Passung eingebaut ist. Der Einbau bzw. die Befestigung erfolgt mit einer Befestigungsschraube 14, die in die Gewindebohrung 55 eingeschraubt wird.

Aus den Fig. 5, 8 ist ersichtlich, daß die Adapterplatte 45 Ausrichtbohrungen 57 aufweist. Diese sind - abweichend von der zeichnerischen Darstellung - üblicherweise mittig angeordnet. Mit Hilfe dieser Ausrichtbohrungen 57 kann die Adapterplatte 45 in Bezug auf den Maschinentisch ausgerichtet werden, indem Zentrierstücke 59 verwendet werden, welche einerseits in die Ausrichtbohrungen 57 und andererseits in die Mittelnut des Maschinentischs eingreifen. Gemäß Fig. 8 ist das obere Zentrierstück 59 ein einteiliger Zapfen, dessen eines Ende einander gegenüberliegende Abflachungen 58 hat, so daß das Zentrierstück 59 damit in eine Nut des Maschinentisches eingesetzt werden kann. Auch das in Fig. 8 untere Zentrierstück 59 hat derartige Abflachungen 58. Diese sitzen jedoch an einem Zentrierstückteil 60, das mit einem Zentrierstückteil 61 axial zusammengesteckt und radial passend ist. Eine Besonderheit besteht darin, daß die Achsen 60', 61' der Teile 60, 61 nicht gleichachsig sind, sondern exzentrisch versetzt. Eine Verdrehung des Zentrierstückteils 61 z.B.

über die Innenmehrkantausnehmung 62 führt infolge des Paßeingriffs in die Ausrichtbohrung 57 dazu, daß die Adapterplatte 45 in den Richtungen des Doppelpfeils 63 verstellt werden kann, wobei das andere Zentrierstück 59 einen Drehpunkt bildet.

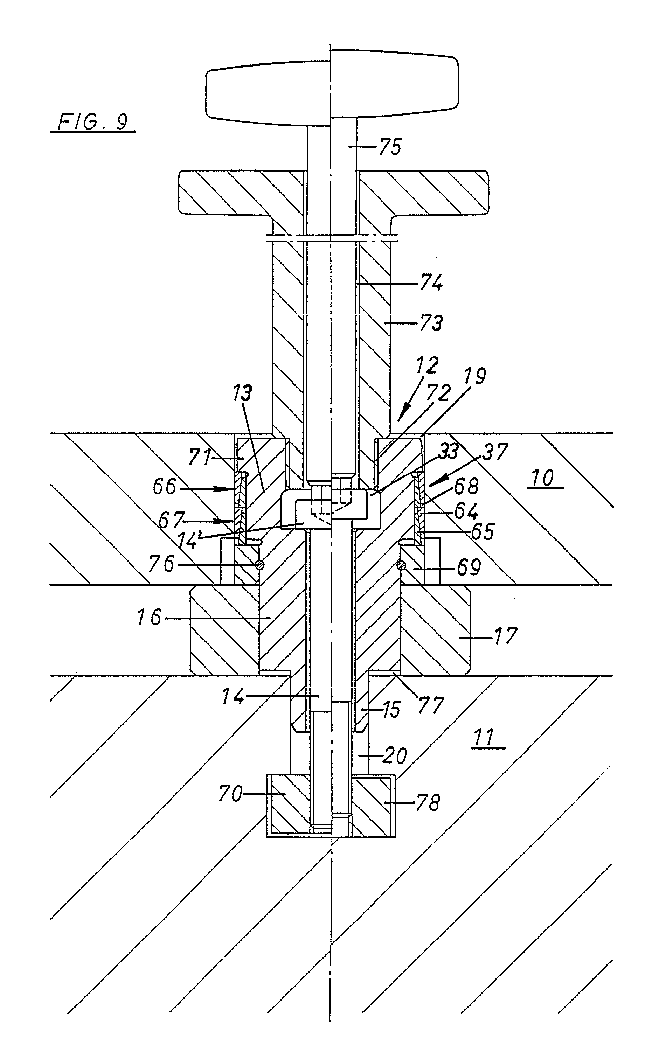

In der Vorbohrung 19 der Formplatte 10 der Fig. 9 ist der Zapfen 13 am Maschinentisch 11 mit der Befestigungsschraube 14 und einer Mutter 70 befestigt, die in dem formplattenabgewandten Nutenabschnitt der T-förmigen Nut 20 angeordnet ist. Bei dieser Befestigung des Zapfens 13 erfolgt eine Abstützung auf dem zwischen dem Maschinentisch 11 und der Formplatte 10 angeordneten Abstandskragen 17, welcher seinerseits ein Druckstück 69 abstützt, das an dem Zapfenende 16 begrenzt axial verschieblich ist. Dieses Druckstück 69 ist an dem Zapfenende 16 mittels des Sprengrings 76 begrenzt beweglich festgelegt.

Am nutenseitigen Ende des Zapfenendes 16 ist das Führungsstück 15 einstückig angebracht und greift in den formplattenseitigen Nutenabschnitt der T-förmigen Nut 20 ein. Das Zapfenende 16 weist einen geringen Abstand 77 zum Maschinentisch 11 auf, damit der Zapfen 13 durch die Befestigungsschraube 14 in Richtung auf den Maschinentisch 11 verstellt werden kann, um das Spreizteil 37 mit einer Druckschulter 71 zu beaufschlagen. Zwischen dieser Druckschulter 71 und dem Druckstück 69 befindet sich eine rechteckigen Querschnitt aufweisende Ringausnehmung 68 zur Aufnahme des Spreizteils 37.

Das Spreizteil 37 besteht aus den beiden Konusringpaaren 66, 67. Jedes Konusringpaar 66, 67 hat zwei Konusringe 64, 65, die gegeneinander gekehrt sind und in die Ringausnehmung 68 zwischen Zapfen 13 und Formplatte 10 einerseits und Druckstück 69 und Druckschulter 71 andererseits passen. Dabei ist die Anordnung so getroffen, daß die Druckschulter 71 bei dem oberen Konusringpaar 66 auf den äußeren Konusring drückt, während bei dem unteren Konusringpaar 67 das Druckstück 69 auf den inneren Konusring 65 drückt. Damit zwischen dem Druckstück 69 und der Druckschulter 71 eine begrenzte Verstellbewegung stattfinden kann, beispielsweise um ihren Abstand voneinander zu verkürzen, drückt der äußere Konusring 64 des unteren Konusringpaars 67 auf den inneren Konusring des oberen Konusringpaares 66.

Eine Verkürzung des Abstands zwischen der Druckschulter 71 und dem Druckstück 69 bewirkt, daß die Konusringe der Konusringpaare 66, 67 ineinandergeschoben werden und sich im Rahmen ihrer Dehnbarkeit spreizen. Dadurch ergibt sich eine Verklemmung des Zapfens 13 in der Formplatte 10, verbunden mit einem Niederzugeffekt des Zapfens 13, der infolgedessen das Druckstück 69 gegen den Abstandskragen 17 drückt. Der Niederzugeffekt bewirkt, daß auf die Formplatte 10 ausgeübte, zu ihr vertikale Kräfte aufgenommen werden können, die über die Befestigungsschraube 14 und die Mutter 70 auf den Maschinentisch 11 abgetragen werden. Die Konusringe 64, 65 bzw. die Konusringpaare 66, 67 haben darüber hinaus den Vorteil, daß zwischen dem Zapfen 13 und der Vorbohrung 19 vorhandene Toleranzen ausgeglichen werden können. In folgedessen ist es nicht erforderlich, den Zapfen 13 exakt auf das Maß der Vorbohrung 19 abzustimmen, so daß beispielsweise der Außenumfang der Druckschulter 71 in dargestellter Weise bewußt kleiner gewählt ist, als es für die lagegenaue Anordnung der Formplatte 10 relativ zum Maschinentisch 11 an sich erforderlich wäre. Das Spreizteil 37 kann also, wie auch bei den Ausführungsformen der Fig. 3, 4, auch zu einer derartigen Toleranz-bzw. Spielüberbrückung verwendet werden, auch wenn der Niederzug-bzw. Aufspanneffekt der Formplatte 10 nicht gewünscht wird, oder in Sonderfällen nicht genügend groß ist.

Die Festlegung des Zapfens 13 mit Hilfe der Befestigunggschraube 14 über die Befestigungsmutter 70 hat den Vorteil, daß der Führungsvorsprung 15 mit dem Zapfen 13 bzw. dessen Zapfenende 16 einstückig ausgebildet werden kann. Infolgedessen ist der Zapfen 13 des Ausrichtelements 12 das einzige Sonderteil der Aufspannvorrichtung, dessen jeweilige Absetzungen im Bereich des Zapfens 13, des Zapfenendes 16 bzw. des Führungsstücks 15 jedoch maschinell einfach und in der jeweils genügenden Genauigkeit zuverlässig herzustellen sind. Dabei sind an die Genauigkeit, mit gewisser Ausnahme für das Führungsstück 15, jeweils nur geringe Anforderungen zu stellen, so daß die Herstellungskosten gering sind. Die des weiteren erforderlichen Teile des Ausrichtelements 12, nämlich die Konusringe 64, 65, das Druckstück 69, der Abstandskragen 17 und die Befestigungsmutter 70 sind herkömmliche Teile, die massenfertigungsgerecht und damit preiswert sind.

Fig. 9 zeigt, daß die Befestigungsschraube 14 mit ihrem Kopf 14' in eine abgesetzte Durchgangsbohrung 33 eingesetzt ist, aus der die Befestigungsschraube 14 zum Lösen ohne weiteres herausgeschraubt werden kann. Hierzu dient ein Betätigungswerkzeug 75, das in die aus der Zeichnung ersichtliche Mehrkantinnenausnehmung des Kopfes 14' eingreift. Hierdurch wird allerdings nicht der Klemmsitz des Zapfens 13 in der Vorbohrung 19 aufgehoben. Dazu ist vielmehr ein Schraubenniederhalterschlüssel 73 vorgesehen, der in eine oberhalb des Kopfes 14' bzw. der Befestigungsschraube 14 gelegene Gewindebohrung 72 des Zapfens 13 eingeschraubt ist und eine zentrale Bohrung 74 aufweist, um das Betätigungswerkzeug 75 anwenden zu können. Beim Herausschrauben der Befestigungsschraube 14 stößt deren Kopf 14' an den Schlüssel 73 und stützt sich infolge der Verklemmung des Zapfens 13 mit der Formplatte 10 derart daran ab, daß die Mutter 70 in die in der rechten Hälfte der Fig. 9 dargestellte Tieflage 78 gedrückt wird. Von da ab drückt die Befestigungsschraube 14 den Zapfen 13 nach oben und löst dessen Verklemmung mit der Formplatte 10.

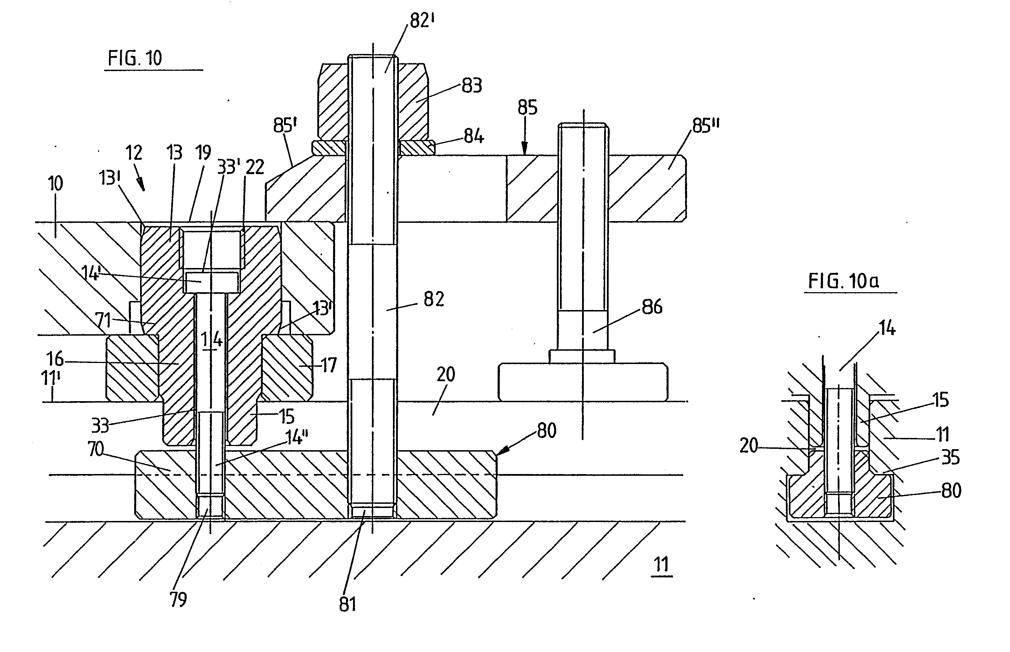

Fig. 10, 10a zeigen ein Ausrichtelement 12, dessen Zapfen 13 ein abgesetztes Ende 16 hat, an das sich ein in die Nut 20 des Maschinentisches 11 eingreifender Führungsvorsprung 15 anschließt. Das Ausrichtelement 12 ist axial von einer Durchgangsbohrung 33 durchsetzt, durch die eine Befestigungsschraube 14 hindurchgesteckt ist, so daß deren unteres, mit einem Gewindeschaft 14'' versehenes Ende über den Führungsvorsprung 15 vorsteht und in ein Gewindeloch 79 einer Befestigungsmutter 70 eingreift. Der Schraubenkopf 14' der Befestigungsschraube 14 ist in einer Kopfausnehmung 33' der Durchgangsbohrung 33 unterhalb eines Innengewindes 22 angeordnet, das als Hinterschneidung für ein Ausziehwerkzeug dient. Das Ausrichtelement 12 bzw. dessen Zapfen 13 sitzt mit einer Druckschulter 71 auf einem Abstandskragen 17 auf und drückt diesen infolge der Verschraubung des Ausrichtelements 12 mit dem Maschinentisch 11 gegen dessen Oberfläche 11'. Der Zapfen 13 sitzt in einer Vorbohrung 19 einer Formplatte 10 und ist an seiner oberen und unteren Kante 13' zur leichteren Trennung von der Formplatte 10 jeweils angefast.

Die Befestigungsmutter 70 ist ein Teil einer Gewindelochleiste 80, die in Fig. 10 außer dem Gewindeloch 79 ein weiteres Gewindeloch 81 hat, das außerhalb des Projektionsbereichs des Ausrichtselements 12 bzw. auch außerhalb des Projektionsbereichs der Formplatte 10 angeordnet ist. Infolgedessen kann die Befestigungsmutter 70 durch Dirigieren des in Fig. 10 rechts dargestellten Endes in der Nut 20 des Tischs 11 so angeordnet werden, daß die Befestigungsschraube 14 ohne größere Schwierigkeit in das Gewindeloch 79 eingeschraubt werden kann. Dabei wird die Gewindelochleiste 80 infolge ihres aus Fig. 10a ersichtlichen T-förmigen Querschnitts nach oben und gegen die Hinterschneidungen 35 der Nut 20 gezogen, so daß die Verspannung ohne ein Aufsitzen des Führungsvorsprungs 15 erfolgt. Sofern die Anordnung der Befestigungsmutter 70 in einem Bereich der Nut 20 erfolgt, der nicht in der Nähe des Nutenendes liegt, kann an dem weiteren Gewindeloch 81 eine Handhabe verschraubt werden, mit der die Gewindelochleiste 80 von oberhalb des Maschinentischs 11 zu dirigieren ist.

Fig. 10 zeigt eine in das weitere Gewindeloch 81 eingedrehte Befestigungsschraube 82 bzw. einen Gewindebolzen, der an seinem anderen, oberen Ende 82' eine Befestigungsmutter 83 aufweist, die über eine Unterlagscheibe 84 auf einen Spannkloben 85 drückt, mit dem die Formplatte 10 auf dem Abstandskragen 17 festgespannt ist. Das Festspannen erfolgt am vorderen Ende 85' des Spannklobens 85, in dessen hinteres Ende 85" eine der Höhenverstellung dienende Gewindestütze 86 eingeschraubt ist, die sich ihrerseits auf der Oberfläche 11' des Maschinentischs 11 abstützt. Eine derartige Verspannung der Formplatte 10 erfolgt, wenn das Ausrichtelement 12 nicht zur Befestigung herangezogen wird, oder wenn die Befestigung durch das Ausrichtelement 12 z. B. gemäß Fig. 9 nur in gewissen Grenzen erfolgen soll, um die Befestigungselemente nicht zu überlasten. Eine derartige hochwirksame Verspannung der Formplatte 10 ist auch dann erforderlich, wenn beim Bearbeiten besonders große, senkrecht zum Maschinentisch 11 auftretende Belastungen zu erwarten sind, z. B. nach oben gerichtete Belastungen durch Fräsen.

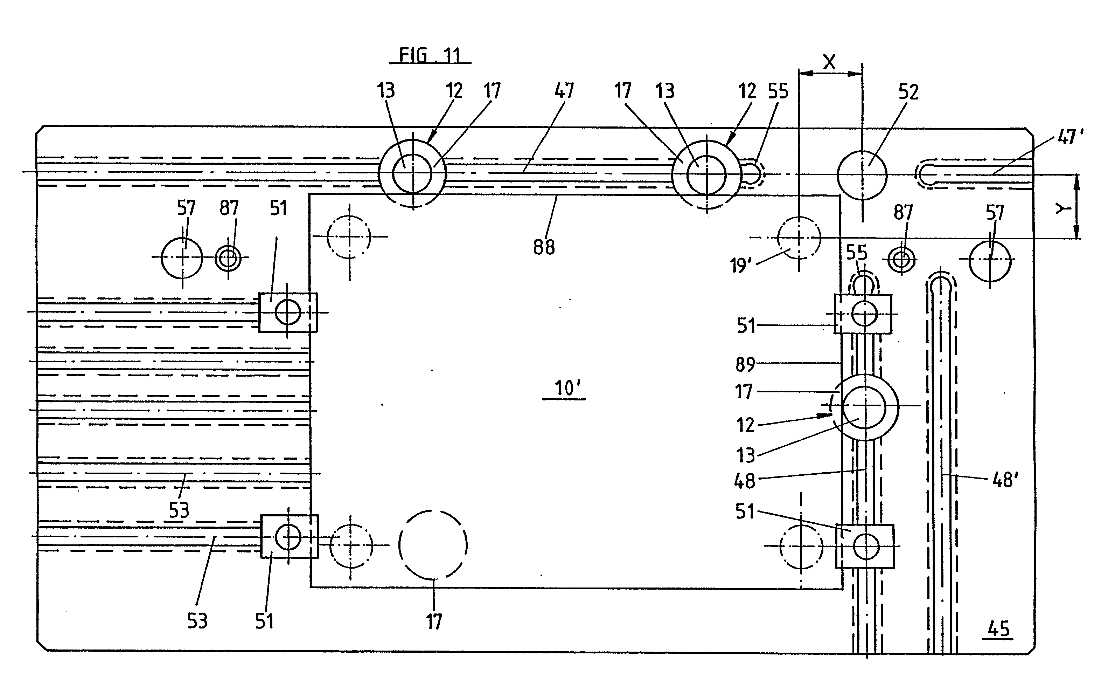

Fig. 11 zeigt eine Adapterplatte 45, die zwei zueinander senkrechte Befestigungsnuten 47, 48 hat. Diese reichen jedoch nicht bis zum Nullpunkt 52, wie die Nuten in Fig. 5, sondern enden aus fertigungstechnischen Gründen mit einem bestimmten Abstand davon in Anfangsbohrungen 55. Dem Nullpunkt 52 gegenüberliegend ist eine fluchtende Befestigungsnut 47', in der beispielsweise ein Spannkloben 51 gemäß Fig. 5, oben links, befestigt wird. Parallel zur Befestigungsnut 48 verläuft eine weitere Befestigungsnut 48', um eine weitere Befestigungsmöglichkeit zu haben. Desweiteren sind Ausrichtbohrungen 57 und in einer Flucht mit diesen liegende Befestigungsbohrungen 87 zum Ausrichten bzw. Festlegen der Adapterplatte 45 am Maschinentisch 11 vorhanden. Diese Platte 45 weist außerdem noch entsprechend der in Fig. 5 dargestellten Adapterplatte 45 weitere parallele Nuten 53 auf.

In der Befestigungsnut 47 sind zwei mit Abstand voneinander angeordnete Ausrichtelemente 12 vorhanden und die Befestigungsnut 48 hat ein Ausrichtelement 12. An den vorgenannten drei Ausrichtelementen 12 liegt eine ungebohrte Formplatte 10' mit ihren Kanten 88 bzw. 89 an. Dabei erfolgt die Ausrichtung durch die Zapfen 13 und die Abstandshalterung der Platte 10' von der Adapterplatte 45 durch die Abstandskragen 17 der Ausrichtelemente 12. Zur gleichmäßigen Unterstützung der Formplatte 10' ist diese an ihrer dem Nullpunkt 52 diagonal gegenüberliegenden Ecke ebenfalls durch einen Abstandskragen 17 unterstützt. Das Festspannen der Formplatte 10' erfolgt mit vier Spannkloben 51.

Die Formplatte 10' ist vorbohrungsfrei und kann mit Hilfe der Adapterplatte 45 von einer gesteuerten Bohrvorrichtung so vorgeb-hrt werden, daß sie nach Herstellung der Vorbohrungen, die in Fig. 11 strichpunktiert angedeutet sind, weiterbearbeitet werden kann, wozu sie mit zweien ihrer Vorbohrungen gemäß Beschreibung zu Fig. 5 auf der Adapterplatte 45 angeordnet bzw. befestigt wird. Dazu ist keine erneute Ausrichtung erforderlich, weil beispielsweise die Vorbohrung 19' Mittelpunktkoordinaten x, y hat, die jeweils dem Radius des maßgenauen Zapfens 13 entsprechen, so daß sämtliche Vorbohrungskoordinaten und Koordinaten etwaiger weiterer Bohr-oder Fräsarbeiten, die in der in Fig. 11 dargestellten Aufspannlage der Platte 10' erfolgen sollen, in dem Bearbeitungsprogramm der Werkzeugmaschine lediglich gemäß x, y geändert werden müssen. Wird die Formplatte 10' nach einer solchen Bearbeitung gelöst und gemäß Fig. 5 erneut aufgespannt, so sind sämtliche Bearbeitungskoordinaten programmgerecht und es können weitere Bearbeitungsvorgänge unter Heranziehung des dann nicht um x, y korrigierten Programms der Werkzeugmaschine durchgeführt werden.

## Ansprüche

1. Aufspannvorrichtung für Werkstücke, insbesondere vorgebohrte Formplatten von Spritzgießwerkzeugen, auf genuteten Maschinentischen von Bearbeitungsmaschinen, mit einem Ausrichtelement, das einen in eine Vorbohrung der Formplatte passend einsetzbaren Zapfen, einen in eine Nut des Maschinentisches passend einsetzbaren Führungsvorsprung sowie einen radial zwischen die Formplatte und den Maschinentisch vorspringenden Kragen aufweist, **dadurch gekennzeichnet,** daß der radial vorspringende Abstandskragen (17) des Ausrichtelements (12) ein auf dessen Zapfen (13) steckbares separates Teil ist.

2. Vorrichtung nach Anspruch 1, **dadurch gekennzeichnet,** daß der Zapfen (13) des Ausrichtelements (12) maschinentischseitig ein abgesetztes Zapfenende (16) hat, auf das der als Ringscheibe ausgebildete Abstandskragen (17) aufgesteckt ist.

3. Vorrichtung nach Anspruch 1 oder 2, **dadurch gekennzeichnet,** daß das abgesetzte Zapfenende (16) kürzer ist, als der Abstandskragen (17) dick.

4. Vorrichtung nach einem oder mehreren der Ansprüche 1 bis 3, **dadurch gekennzeichnet,** daß der Zapfen (13) eine Ausnehmung (21) mit einer Hinterschneidung für ein Ausziehwerkzeug aufweist.

5. Aufspannvorrichtung, insbesondere nach einem der Ansprüche 1 bis 3, **dadurch gekennzeichnet,** daß der Zapfen (13) des Ausrichtelements (12) in der Vorbohrung (19) der Formplatte (10) ein zu deren Befestigung und/oder Radialausrichtung dienendes Spreizteil (37) aufweist.

6. Vorrichtung nach Anspruch 4, **dadurch gekennzeichnet**, daß das Spreizteil (37) eine längsgeschlitzte Hülse mit Innenkonus ist, welche auf einem Außenkonus des Zapfens (13) spreizbar ist, oder daß das Spreizteil (37) ein aus den Zapfen (13) umgebenden Federspannringen (39) bestehendes Paket ist.

7. Vorrichtung nach Anspruch 6, **dadurch gekennzeichnet**, daß das Spreizteil (37) von einer in den Führungsvorsprung (15) oder den Zapfen (13) eingreifenden Befestigungsschraube (14) direkt oder mit einem Druckstück (38) oder von einem an dem Zapfen (13) zu verstellenden Druckstück (40) spreizbar ist.

8. Vorrichtung nach Anspruch 4, **dadurch gekennzeichnet**, daß das Spreizteil (37) mindestens ein in sich geschlossener Konusring (64) ist, der mit einem konzentrisch zum Zapfen 13 angeordneten zweiten Konusring (65) oder auf einem Außenkonus des Zapfens (13) spreizbar ist.

9. Vorrichtung nach Anspruch 8, **dadurch gekennzeichnet**, daß zwei Konusringpaare (66, 67) übereinander in einer rechteckigen Querschnitt aufweisenden Ringausnehmung (68) des Zapfens (13) angeordnet und mit einem zumindest auf einen der Konusringe (65) einwirkenden Druckstück (69) spreizbar sind.

10. Vorrichtung nach einem oder mehreren der Ansprüche 1 bis 9, **dadurch gekennzeichnet**, daß der Führungsvorsprung (15) zumindest axial mit den Zapfen (13) fest verbunden ist, der von einer Befesti gungsschraube (14) und einer damit zusammenwirkenden Befestigungsmutter (70) in einer Nut (20) des Maschinentisches (11) zu diesem hin spannbar ist, und/oder daß der Zapfen (13) bedarfsweise ein begrenzt axial bewegliches, auf dem Abstandskragen (17) abstützbares Druckstück (69) sowie einen diesem gegenüber, auf der anderen Seite des Konusrings (64) oder der Konusringpaare (66, 67) angeordnete feste Druckschulter (71) aufweist.

11. Vorrichtung nach einem oder mehreren der Ansprüche 1 bis 10, **dadurch gekennzeichnet**, daß die Befestigungsmutter (70) ein Teil einer Gewindelochleiste (80) ist, die mindestens ein weiteres außerhalb des axialen Projektionsbereichs des Ausrichtelements (12) gelegenes Gewindeloch (81) hat, in das eine Leistenhandhabe und/oder eine Befestigungsschraube (82) eingeschraubt ist.

12. Vorrichtung nach einem oder mehreren der Ansprüche 4 bis 11, **dadurch gekennzeichnet**, daß der Zapfen (13) eine oberhalb einer Befestigungsschraube (14) gelegene Gewindebohrung (72) mit einem darin einsetzbaren Schraubenniederhalterschlüssel (73) aufweist, der eine zentrale Bohrung (74) für ein Betätigungswerkzeug (75) der Befestigungsschraube (14) hat.

13. Aufspannvorrichtung für Werkstücke, insbesondere vorgebohrte Formplatten von Spritzgießwerkzeugen, auf genuteten Maschinentischen von Bearbeitungsmaschinen, insbesondere nach einem der Ansprüche 1 bis 12, **dadurch gekennzeichnet**, daß eine auf dem Maschinentisch (11) ausrichtbare Adapterplatte (45) mit zwei einander senkrechten Befestigungsnuten (47, 48) vorhanden ist.

14. Vorrichtung nach Anspruch 13, **dadurch gekennzeichnet**, daß die beiden Befestigungsnuten (47, 48) jeweils in Kantennähe der Adapterplatte (45) angeordnet sind.

15. Vorrichtung nach Anspruch 12 oder 13, **dadurch gekennzeichnet**, daß die Adapterplatte (45) weitere, einer der Befestigungsnuten (47, 48) parallele Nuten und/oder weitere Spannbohrungen aufweist.

16. Vorrichtung nach einem oder mehreren der Ansprüche 13 bis 15, **dadurch gekennzeichnet**, daß die Adapterplatte (45) im Schnittbereich der beiden einander senkrechten Befestigungsnuten (47, 48) eine Bohrung (56) hat, in die ein Ausrichtelement (12') für vorgebohrte Formplatten (10) mit einem Befestigungsvorsprung (15a) hineingesteckt und mit der Adapterplatte (45) verschraubbar ist.

17. Vorrichtung nach einem der Ansprüche 13 bis 16, **dadurch gekennzeichnet**, daß die Adapterplatte (45) maschinentischseitig mit einem tischnutenparallelen Nutenpaßstab oder mit zwei in Nuten des Maschinentisches passenden Zentrierstücken (59) versehen ist, von denen eines einen Verstellexcenter (Teil 61) aufweist.

18. Vorrichtung nach einem oder mehreren der Ansprüche 13 bis 17, **dadurch gekennzeichnet**, daß die Adapterplatte (45) in ihren beiden Befestigungsnuten (47, 48) mindestens drei als Kantenanschläge einer zu bearbeitenden Vorbohrungsfreien Formplatte (10') wirkende Ausrichtelemente (12) aufweist, und daß die Formplatte (10') bei ihrer Bearbeitung an der Adapterplatte (45) mit Abstand zu dieser befestigt ist.

FIG.1

FIG.3

FIG.4

_FIG.5_

_FIG.6_

FIG.2

FIG.7

FIG.8

FIG. 9

FIG. 10

FIG. 10a

0 275 923

11

FIG.11